Europäisches Patentamt

European Patent Office

Office européen des brevets

(11) Numéro de publication: **0 178 016**
**B1**

(12) **FASCICULE DE BREVET EUROPÉEN**

(45) Date de publication du fascicule du brevet:
**17.01.90**

(21) Numéro de dépôt: **85201574.2**

(22) Date de dépôt: **01.10.85**

(51) Int. Cl. ⁴ : **H 04 M 1/02**

(54) Terminal de téléphonie à architecture modulaire et modules pour un tel terminal.

(30) Priorité: **05.10.84 FR 8415310**

(43) Date de publication de la demande:
**16.04.86 Bulletin 86/16**

(45) Mention de la délivrance du brevet:
**17.01.90 Bulletin 90/03**

(84) Etats contractants désignés:
**BE DE FR GB IT SE**

(56) Documents cité:
**FR-A-2 350 764**
**US-A-4 291 202**

**ERICSSON REVIEW, vol. 53, no. 3, 1976, pages 118-133, Stockholm, SE; A. BOERYD et al.: "Electronic push-button telephone set - ERICOFON 700"**

(73) Titulaire: **LA RADIOTECHNIQUE PORTENSEIGNE**
**51, Rue Carnot**
**F-92150 Suresnes (FR)**
(84) Etats contractants désignés: **FR**

(73) Titulaire: **N.V. Philips' Gloeilampenfabrieken**
**Groenewoudseweg 1**
**NL-5621 BA Eindhoven (NL)**
(84) Etats contractants désignés: **BE DE GB IT SE**

(72) Inventeur: **Rault, Henri-Alain André**
**Société Civile S.P.I.D. 209, rue de l'Université**
**F-75007 Paris (FR)**

(74) Mandataire: **Caron, Jean**
**SOCIETE CIVILE S.P.I.D. 209, rue de l'Université**
**F-75007 Paris (FR)**

LIBERGRAF, STOCKHOLM 1990

**Description**

La présente invention a pour objet un terminal de téléphonie pour être raccordé à une ligne téléphonique, sujet à des variantes de réalisation lesdites variantes étant, soit techniques en fonction du réseau téléphonique, soit fonctionnelles selon le service fourni par le terminal, comportant notamment des premiers moyens de protection contre les surcharges, des deuxièmes moyens de prise de ligne, des troisièmes moyens de traitement des signaux téléphoniques.

La présente invention a aussi pour objet les différents modules indépendants, qui, une fois réunis, constituent un terminal de téléphonie.

Les terminaux de téléphonie et les moyens qu'ils comportent sont aujourd'hui bien connus, par exemple de par la publication "ERICSSON Review, volume 53, n° 3, 1976, pages 118 - 133, Stockholm, SE; A. BOERYD et al.: 'Electronic push-button telephone set - ERICOFON 700'"; un cas simple est un poste téléphonique classique qui, vu de l'extérieur comporte un socle et un combiné; dans le combiné il n'y a qu'un micro et une capsule haut-parleur reliés au socle par un cordon à quatre fils pour transmettre les signaux audio; dans le socle il y a tous les circuits nécessaires au fonctionnement du poste; pour satisfaire les normes de protection, qui protègent tant le poste que l'usager, certains circuits sont à l'épreuve des courts-circuits et/ou des hautes tensions accidentels en provenance de la ligne; d'autres circuits ne sont prévus que pour travailler en basse tension ce qui se traduit physiquement par une technologie différente.

A côté du poste téléphonique classique, la miniaturisation apportée par l'électronique moderne a permis de réaliser depuis quelques années des postes téléphoniques monoblocs; le bloc unique ressemble relativement à un combiné de poste classique sauf qu'il comporte en plus des moyens de numérotation et un interrupteur de prise de ligne ces deux derniers éléments se substituant respectivement au cadran de numérotation et à la fourche bien connus dans le socle des appareils classiques; ainsi le poste monobloc comporte tous les circuits nécessaires et peut fonctionner sans socle avec un simple cordon muni d'un conjoncteur à connecter à une prise murale.

Au vu de l'évolution rapide des techniques modernes lesquelles ont permis notamment la réalisation des postes monoblocs, ces architectures connues ne vont pas sans inconvénients.

Dans un poste téléphonique monobloc ou bibloc comme susdit, selon que l'on veut changer le réseau auquel il est connecté, ou bien changer le service qu'il fournit, dans les deux cas tout le poste doit être changé.

Selon la présente invention un terminal de téléphonie est particulièrement remarquable en ce que son architecture comporte un premier module constitué notamment desdits premiers et deuxièmes moyens et un deuxième module constitué notamment desdits troisièmes moyens de telle sorte que premièrement la constitution dudit premier module reste inchangée pour un même réseau quel que soit le service fourni deuxièmement la constitution dudit deuxième module reste inchangée pour un même service fourni quel que soit le réseau.

Autrement dit le premier module comporte, par exemple, toutes les protections exigées par le réseau - c'est à dire dans le cas général les protections exigées par l'Administration de l'Etat - de telle sorte que aucune protection supplémentaire n'est nécessaire dans le deuxième module dans lequel tous les moyens sont d'une technologie basse tension - c'est à dire par exemple des moyens conformes aux recommandations du CCITT -.

Les recommandations du CCITT étant suivies par la plupart des pays européens - pour ne pas dire par le monde entier -, on comprend les avantages décisifs que l'invention procure tant au fabricant qu'au client.

Pour le fabricant, l'invention procure des énormes avantages d'approvisionnement - quantités plus grandes - et de grandes séries de fabrication.

Pour le client - l'Administration par exemple les PTT en France - l'invention procure des énormes économies de stockage car au gré de l'évolution des techniques il est maintenant plus souple de déstocker un seul module périmé et d'approvisionner le seul module remplaçant plutôt qu'un terminal complet, tout en conservant la mème qualité du service aux usagers.

Pour bénéficier pleinement de toute la souplesse de réalisation des variantes, il est particulièrement avantageux que les deux modules soient connectés par des moyens de connexion qui comportent au moins une extrémité enfichable.

Avantageusement les moyens de connexion comportent notamment:

- une première connexion pour transmettre un signal de référence commun,
- une deuxième connexion pour transmettre au deuxième module une alimentation en provenance du premier module,
- une troisième connexion pour transmettre au premier module les commandes d'ouverture de boucle en provenance du deuxième module,
- une quatrième connexion pour transmettre des informations de commande de contrôle automatique du gain.

D'autres avantages apparaîtront mieux et un mode de réalisation préféré mais non limitatif sera mieux compris à l'aide de la description suivante qui comporte deux figures:

La figure 1 montre un poste téléphonique.
La figure 2 montre un réseau 2a par exemple en France, et un réseau 2b par exemple en Suède.

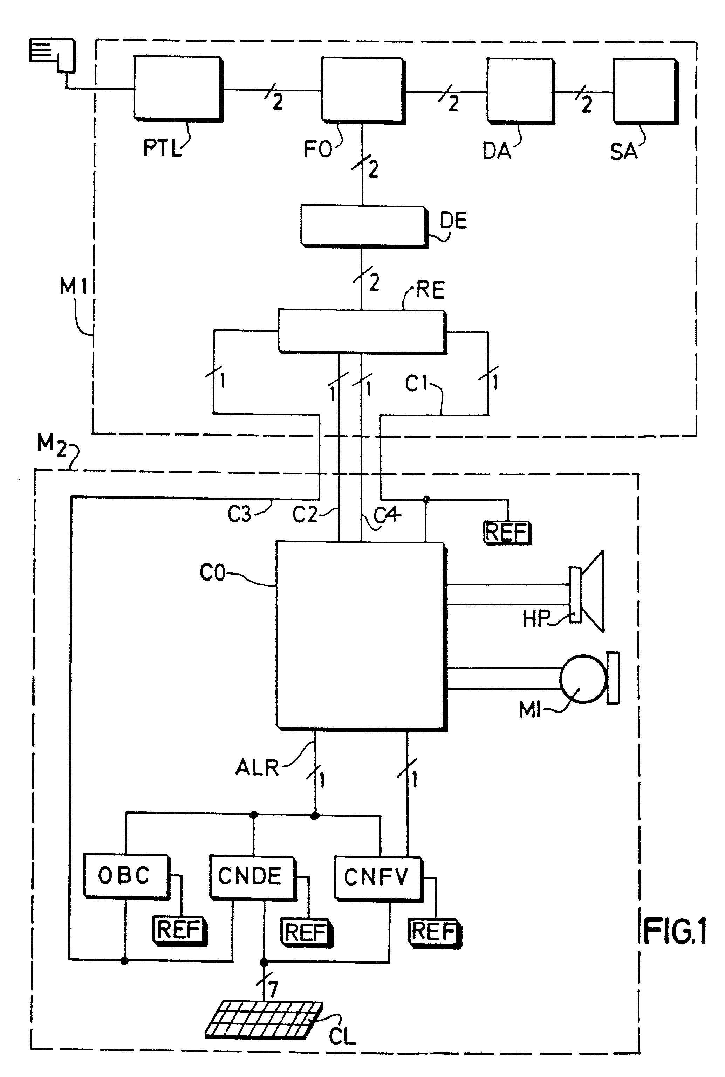

Dans la figure 1 un poste téléphonique pour la France est décrit mais ceci n'est limitatif ni en ce qui concerne un poste téléphonique ni en ce qui concerne la France. Pour un autre pays et un autre service, la structure du terminal téléphonique serait équivalente.

Dans le premier module (M1) sont représentés des moyens de protection de tête de ligne (PTL), un moyen de fourche (FO), des moyens de détection d'appel (DA) et de signalisation d'appel (SA): la signalisation d'appel peut être une sonnerie, un signal lumineux ou autres; les lignes de connexion sont toutes représentées symboliquement avec le signe "/n" où 'n' représente le nombre de fils généralement utilisés.

Lorsqu'il y a détection d'appel, et qu'il y a décrochage de la fourche - exemple: l'usager prend la ligne en prenant le combiné qui était posé sur la fourche -, les signaux sont transmis au pont de dépolarisation (DE) et aux moyens de régulation (RE).

Tous les moyens ci-dessus mentionnés dans le premier module (M1) sont réalisés en technologie dite haute tension ceci en fonction des spécifications du réseau téléphonique; en France les PTT spécifient de supporter la foudre, le court-circuit avec une ligne de l'EDF, etc...; dans d'autres pays les spécifications peuvent être différentes ce qui se traduira par des variantes du premier module.

Par contre pour un même pays le premier module restera inchangé tant que les spécifications du réseau seront inchangées.

Dans le deuxième module (M2) sont représentés le convertisseur (C0) 2 fils/4 fils avec la capsule (H.P.) et le micro (M1); le convertisseur (C0) transmet une alimentation régulée (ALR) aux circuits de numérotation; selon les recommandations du CCITT, le système de numérotation est en train d'évoluer de la numérotation décimale vers la numérotation à fréquence vocale c'est pourquoi les deux circuits sont représentés mais dans la pratique un seul circuit sera présent car un central téléphonique ne peut être, à un moment donné, que décimal ou que fréquence vocale; dans tous les cas il y a des moyens de numérotation ici un clavier (CL) qui commande soit le circuit décimal (CNDE) soit le circuit fréquence vocale (CNFV).

Quel que soit le circuit de numérotation effectivement monté dans le module M2, le même circuit imprimé peut être utilisé; en effet les connexions aboutissant ou circuit de numérotation non monté ne provoquent pas de perturbations de fonctionnement du module. Un seul et même circuit imprimé peut donc être utilisé.

Les circuits de numérotation dont notamment un circuit d'ouverture de boucle calibrée (OBC) émettent des commandes d'ouverture de boucle transmises au premier module par la connexion (C3).

Les moyens de régulation (RE) du premier module (M1) sont connectés au convertisseur (C0) du deuxième module (M2); une première connexion (C1) transmet un signal de référence (REF) commun à tous les circuits; une deuxième connexion (C2) transmet une alimentation en provenance de la ligne téléphonique; une troisième connexion (C4) transmet des informations de commande de contrôle automatique de gain.

Cette description n'est pas destinée à expliquer le fonctionnement d'un poste téléphonique que l'homme du métier connaît bien mais elle décrit la constitution du premier module (M1) et du deuxième module (M2) qui, dans le cas non limitatif d'un poste téléphonique, sont reliés par les quatre connexions (C1, C2, C3, C4) ci-dessus décrites.

Pour d'autres types de terminaux de téléphonie, la même architecture est évidemment avantageuse; par exemple le deuxième module d'un poste téléphonique devient enfichable dans un terminal Minitel qui, selon l'invention, comporte donc un premier module qu'il n'est plus nécessaire de mettre en double chez l'usager; de même un répondeur téléphonique devient enfichable dans un poste téléphonique comportant déjà le premier module ce qui simplifie le répondeur dans lequel le premier module n'est plus nécessaire; le même répondeur enfichable pourra être utilisé dans n'importe quel pays puisque le deuxième module du répondeur n'est pas dépendant du réseau.

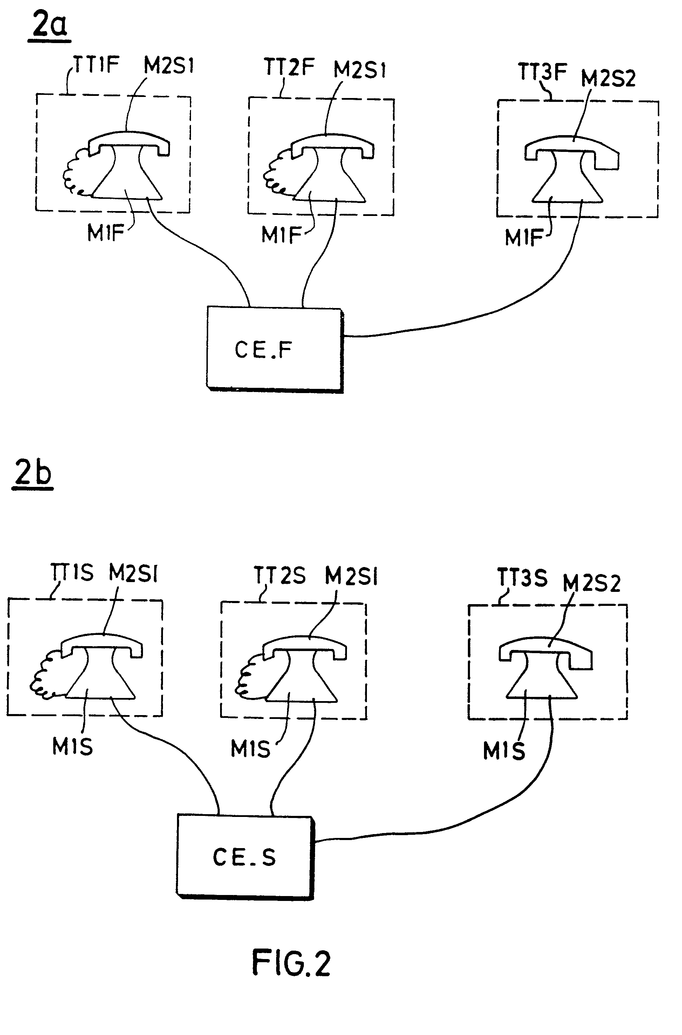

Cette interchangeabilité, ou portabilité, des modules qui résulte de l'architecture conforme à l'invention est illustrée dans la figure 2 où un ensemble de terminaux de téléphonie (TTii) sont connectés sur la figure 2a à un central téléphonique français (CE.F) et sur la figure 2b à un central téléphonique par exemple suédois (CE.S).

Chaque terminal (TTii) comporte deux modules conformément à l'invention; dans le réseau français, tous les premiers modules (M1F) de chaque terminal (TT1F, TT2F, TT3F) sont les mêmes; dans le réseau suédois, tous les premiers modules (M1S) de chaque terminal (TT1S, TT2S, TT3S) sont les mêmes; pour un même service (S1) les deuxièmes modules (M2S1) des terminaux TT1F, TT2F, TT1S et TT2S sont les mêmes; pour un autre même service (S2) les deuxièmes modules (M2S2) des terminaux TT3F et TT3S sont les mêmes.

La description ci-dessus montre bien que tous les éléments des deuxièmes modules sont d'une technologie basse tension puisque tous les premiers modules comportent les protections contre les surcharges spécifiées pour chaque réseau téléphonique.

## Revendication

1. Terminal de téléphonie pour être raccordé à une ligne téléphonique, sujet à des variantes de réalisation lesdites variantes étant, soit techniques en fonction du réseau téléphonique, soit fonctionnelles selon le service fourni par le terminal, comportant notamment des premiers moyens de protection contre les surcharges, des deuxièmes moyens de prise de ligne, des troisièmes moyens de traitement des signaux téléphoniques, caractérisé en ce que son architecture comporte un premier module constitué notamment desdits premiers et deuxièmes moyens et un deuxième module constitué notamment desdits troisièmes moyens de telle sorte que premièrement la constitution dudit premier module reste inchangée pour un même réseau quel que soit le service fourni deuxièmement la constitution dudit deuxième module reste inchangée pour un même service fourni quel que soit le réseau.

2. Terminal de téléphonie selon la revendication 1, caractérisé en ce que le premier module comporte toutes les protections exigées par le réseau de telle sorte que aucune protection supplémentaire n'est nécessaire dans le deuxième module dans lequel tous les moyens sont d'une technologie basse tension.

3. Terminal de téléphonie selon la revendication 1 ou 2, caractérisé en ce que les deux modules sont connectés par des moyens de connexion qui comportent au moins une extrémité enfichable pour bénéficier pleinement de la souplesse de réalisation des variantes.

4. Terminal de téléphonie selon la revendication 3, caractérisé en ce que les dits moyens de connexion comportent notamment:

— une première connexion pour transmettre un signal de référence commun,
— une deuxième connexion pour transmettre au deuxième module une alimentation en provenance du premier module,
— une troisième connexion pour transmettre au premier module les commandes d'ouverture de boucle en provenance du deuxième module,
— une quatrième connexion pour transmettre des informations de commande de contrôle automatique du gain.

5. Terminal de téléphonie selon revendication 4 comportant un socle et combiné caractérisé en ce le premier module est logé dans le socle et en ce que le deuxième module est logé dans le combiné.

6. Terminal de téléphonie la revendication 5 pour fournir les services d'un poste téléphonique habituel caractérisé en ce que premier module comporte notamment les moyens de protection, les moyens de fourche, les moyens de détection d'appel et de signalisation d'appel et les moyens de dépolarisation et/ou de régulation du courant de ligne et en ce que le deuxième module comporte notamment le convertisseur 2 fils/4 fils, la capsule, le micro et les moyens de commande de la numérotation.

7. Terminal de téléphonie selon la revendication 6 dans lequel chacun des moyens est notamment constitué de composants électriques/électroniques montés sur un/des circuit(s) imprimé(s) caractérisé en ce que le deuxième module ne comporte qu'un seul circuit imprimé qui reste identique à lui-même quelles que soient les dites variantes techniques dépendantes du réseau.

8. Module de téléphonie pour utilisation dans un terminal de téléphonie selon l'une quelconque des revendications 1 à 7, le terminal comportant notamment des premiers moyens de protection contre les surcharges, des deuxièmes moyens de prise de ligne, et des troisièmes moyens de traitement des signaux téléphoniques, caractérisé en ce que il comporte lesdits premiers et deuxièmes moyens.

9. Module de téléphonie pour utilisation dans un terminal de téléphonie selon l'une quelconque des revendications 1 à 8, le terminal comportant notamment des premiers moyens de protection contre les surcharges, des deuxièmes moyens de prise de ligne, et des troisièmes moyens de traitement des signaux téléphoniques, caractérisé en ce il comporte les dits troisièmes moyens.

## Claims

1. A telephone terminal for connection to a telephone line, of which several variants are possible, either technical variants as a function of the telephone network, or functional variants in accordance with the service provided by the terminal, comprising more specifically first means for overvoltage protection, second means for accessing the line, third means for processing telephone signals, characterized in that its structure comprises a first module which is more particularly constituted by said first and second means, and a second module constituted more particularly by said third means, such that firstly the structure of said first module remains unchanged for a same network whatever the service provided, and secondly the structure of said second module remains unchanged for a same service provided, whatever the telephone network.

2. A telephone terminal as claimed in Claim 1, characterized in that the first module comprises all the protections required by the network, in such a manner that no additional protection is necessary in the second module in which all means are implemented in low-voltage technology.

3. A telephone terminal as claimed in Claim 1 or 2, characterized in that the two modules are connected by connecting means which have at least one plug-in end to fully profit from the versatility of the embodiments of the variants.

4. A telephone terminal as claimed in Claim 3, characterized in that the connection means comprise more specifically:

— a first connection for transmitting a common reference signal,

7

- a second connection for transmitting to the second module a supply voltage coming from the first module,
- a third connection for transmitting to the first module the loop-opening commands originating from the second module,
- a fourth connection for transmitting automatic gain control command data.

5. A telephone terminal as claimed in Claim 4, comprising a base and a handset, characterized in that the first module is incorporated in the base and that the second module is incorporated in the handset.

6. A telephone terminal as claimed in Claim 5 to provide the services of a conventional telephone set, characterized in that the first module comprises more particularly protection means, cradle means, call detection and call signalling means and means for depolarising and/or controlling the line current, and in that the second module comprises more specifically the 2 wire/4 wire converter, the loudspeaker, the microphone and the dialling control means.

7. A telephone terminal as claimed in Claim 6 in which each means is more particularly constituted by electric/electronic components incorporated in one p.c. board or in p.c. boards, characterized in that the second module comprises only one printed circuit board which remains the same, whatever said technical variants depending on the network.

8. A telephone module to be used in a telephone terminal as claimed in any of the Claims 1 to 7, the terminal comprising specifically first overvoltage protection means, second line accessing means and third processing means for processing telephone signals, characterized in that it comprises the above first and second circuit means.

9. A telephone module to be used in a telephone terminal as claimed in any of the Claims 1 to 8, the terminal specifically comprising first overvoltage protection means, second line accessing means and third processing means for processing telephone signals, characterized in that it comprises the said third circuit means.

**Patentansprüche**

1. Fernsprechendstelle zum Anschluß an eine Fernsprechleitung, von der mehrere Abwandlungen möglich sind, wobei diese Abwandlungen entweder technischer Art sind in Funktion des Fernsprechnetzwerkes, oder funktioneller Art entsprechend der Dienstleistung der Endstelle, mit insbesondere ersten Mitteln zum Schützen gegen Überspannung, zweiten Mitteln für den Zugriff zu der Leitung, dritten Mitteln zum Verarbeiten von Fernsprechsignalen, *dadurch gekennzeichnet,*

8

daß die Struktur einen ersten Modul aufweist, der insbesondere aus den genannten ersten und zweiten Mitteln gebildet ist, sowie einen zweiten Modul, der insbesondere aus den genannten dritten Mitteln gebildet ist, und zwar derart, daß erstens die Struktur des genannten ersten Moduls ungeändert bleibt für dasselbe Netzwerk, wie die Dienstleistung auch sein mag, zweitens die Struktur des genannten zweiten Moduls für dasselbe Netzwerk ungeändert bleibt, wie die Dienstleistung auch sein mag.

2. Fernsprechendstelle nach Anspruch 1 *dadurch gekennzeichnet,* daß der erste Modul alle für das Netzwerk erforderlichen Schutzmittel aufweist, derart daß kein einziges zusätzliches Schutzmittel in dem zweiten Modul notwendig ist, in dem alle Mittel in Niederspannungs-Technologie ausgebildet sind.

3. Fernsprechendstelle nach Anspruch 1 oder 2, *dadurch gekennzeichnet,* daß die zwei Module durch Verbindungsmittel miteinander verbunden sind, die mindestens ein Einsteck-Ende aufweisen, damit die Vielseitigkeit der Abwandlungen voll ausgenützt werden kann.

4. Fernsprechendstelle nach Anspruch 3, *dadurch gekennzeichnet,* daß die genannten Verbindungsmittel insbesondere die folgenden Elemente aufweisen:

- eine erste Verbindung zum Übertragen eines gemeinsamen Bezugssignals;
- eine zweite Verbindung zum Übertragen einer von dem ersten Modul herrührenden Speisespannung zu dem zweiten Modul;
- eine dritte Verbindung zum Übertragen der von dem zweiten Modul herrührenden Schleifenöffnungsbefehle zu dem ersten Modul;
- eine vierte Verbindung zum Übertragen von Befehlsdaten zur automatischen Verstärkungsregelung.

5. Fernsprechendstelle nach Anspruch 4 mit einem Sockel und einem Hörer, *dadurch gekennzeichnet,* daß der erste Modul in dem Sockel und der zweite Modul in dem Hörer untergebracht ist.

6. Fernsprechendstelle nach Anspruch 5 zum liefern der Dienste eines üblichen Fernsprechers, *dadurch gekennzeichnet,* daß der erste Modul insbesondere die Schutzmittel, die Gabelmittel, die Rufdetektionsund - signalisierungsmittel und die Mittel zur Depolarisation und/oder Regelung des Leitungsstromes und daß der zweite Modul insbesondere den 2-Draht/4-Draht-Wandler, den Lautsprecher, das Mikrophon und die Wählsteuermittel aufweist.

7. Fernsprechendstelle nach Anspruch 6, in der jedes Mittel insbesondere aus elektrischen/elektronischen Bausteinen aufgebaut ist, die auf (einer) Printplatte(n) angeordnet sind, *dadurch gekennzeichnet*, daß der zweite Modul nur eine gedruckte Schaltung aufweist, die dieselbe bleibt, welche die genannten, von dem Netzwerk abhängigen, technischen Abwandlungen auch sein mögen.

8. Fernsprechmodul zum Gebrauch in einer Fernsprechendstelle nach einem der Ansprüche 1 bis 7, wobei die Endstelle insbesondere erste Mittel aufweist zum Schützen gegen Überspannung, zweite Mittel zum Zugriff zu der Leitung und dritte Mittel zur Verarbeitung der Fernsprechsignale, *dadurch gekennzeichnet*, daß er die genannten ersten und zweiten Mittel aufweist.

9. Fernsprechmodul zum Gebrauch in einer Fernsprechendstelle nach einem der Ansprüche 1 bis 8, wobei diese Endstelle insbesondere erste Mittel zum Schützen gegen Überspannung, zweite Mittel zum Zugriff zu der Leitung und dritte Mittel zur Verarbeitung der Fernsprechsignale, *dadurch gekennzeichnet*, daß er die genannten dritten Mittel aufweist.

EP 0 178 016 B1

FIG.1

## 2a

TT1F  M2S1  TT2F  M2S1  TT3F  M2S2

M1F  M1F  M1F

CE.F

## 2b

TT1S  M2S1  TT2S  M2S1  TT3S  M2S2

M1S  M1S  M1S

CE.S

FIG.2